# EUROPEAN PATENT SPECIFICATION

(11) **EP 3 062 314 B1**
(45) Date of publication and mention of the grant of the patent: **22.01.2020**
(21) Application number: 14855190.6
(22) Date of filing: 22.08.2014
(51) Int. Cl.: G21F 9/02, B01J 20/18, C01B 39/22, G21C 9/00, G21D 3/06, B01J 20/28, B01D 53/68, B01D 53/82

(54) **DISPOSAL METHOD FOR RADIOACTIVE IODINE**
ENTSORGUNGSVERFAHREN FÜR RADIOAKTIVES JOD
PROCÉDÉ D'ÉLIMINATION D'IODE RADIOACTIF

(30) Priority: 23.10.2013 JP 2013219867
(43) Date of publication of application: 31.08.2016
(73) Proprietor: Rasa Industries, Ltd., Tokyo 104-0031 (JP)
(72) Inventor: KOBAYASHI, Toshiki, Tokyo 104-0031 (JP); ENDO, Koji, Tokyo 104-0031 (JP)
(74) Representative: Cabinet Beau de Loménie
(86) International application number: PCT/JP2014/072011
(87) International publication number: WO 2015/059994

(56) References cited:
- EP-A1- 0 175 435
- WO-A1-2012/147937
- JP-A- H1 095 611
- JP-A- 2003 020 489
- US-A- 3 658 467
- US-A- 3 838 554
- US-A- 4 088 737
- US-A- 4 913 850
- Astm International: "Standard Test Method for Attrition and Abrasion of Catalysts and Catalyst Carriers", Test Method for Attrition and Abrasion of Catalysts and Catalyst Carriers, 1 December 2011 (2011-12-01), XP055587766, West Conshohocken, PA DOI: 10.1520/D4058-96R15 Retrieved from the Internet: URL:http://www.astm.org/cgi-bin/resolver.c gi?D4058-96R15 [retrieved on 2019-05-13]
- Loran S. O'bannon: "Dictionary of Ceramic Science and Engineering" In: "Dictionary of Ceramic Science and Engineering", 31 December 1984 (1984-12-31), Plenum Press, XP055587926, * page 19, column 2 * * page 130, column 1 *

## Description

### TECHNICAL FIELD

The present invention relates to a method for treating radioactive iodine contained in steam discharged from a nuclear power facility.

### BACKGROUND ART

Nuclear power facilities, such as nuclear power plants and the like, are conventionally equipped with a filter for removing radioactive iodine. A flow of radioactive iodine-containing steam generated in a nuclear power facility is passed through the filter so that radioactive iodine is adsorbed and removed before being discharged from the nuclear power facility. This process is very important, and therefore, research and development efforts have been and are still being undertaken in order to achieve improvements in the radioactive iodine adsorbing effect of the filter. Among these improvements is an adsorbent having high efficiency of removing radioactive iodine even at high humidity (see, for example, Patent Document 1). Patent Document 1 indicates that the efficiency of removal of methyl iodide which is a radioactive iodine compound is improved by an adsorbent including alumina having a large number of pores having an average pore diameter of 200-2000 Å, on which a metal or a compound containing the metal is supported.

Zeolite may be used as a support in a radioactive iodine adsorbent (see, for example, Patent Document 2). Patent Document 2 describes a radioactive iodine adsorbent in which silver is supported on zeolite having a silica-to-alumina mole ratio of 15 or more. Document 2 indicates that, in this radioactive iodine adsorbent, only a small amount of silver supported is required to achieve highly efficient removal of radioactive iodine.

### CITATION LIST

### PATENT LITERATURE

Patent Document 1: Japanese Unexamined Patent Application Publication No. S54-4890
Patent Document2: EP 0 175 435 A1

Iodine and organic iodine compounds which may be radioactive and which may be found in waste gases or vapors from nuclear reactors can be removed from such gases or vapors by passing the iodine or organic iodine compound-containing gases or vapors through a layer of binder-free silver-exchanged molecular sieve granulates of the faujasite type according to US patent 4,913,850.

A method of absorbing and retaining air-borne inorganic iodine and organic iodine species by passing a gaseous stream containing these iodines through a filter bed of synthetic zeolite in a metal ion-exchanged form, which metal is reactive with iodine, is shown in US patent 3,658,467.

According to US patent 4,088,737, fission product iodine is removed from a waste gas stream and stored by passing the gas stream through a bed of silver-exchanged zeolite until the zeolite is loaded with iodine, passing dry hydrogen gas through the bed to remove the iodine and regenerate the bed, and passing the hydrogen stream containing the hydrogen iodide thus formed through a lead-exchanged zeolite which adsorbs the radioactive iodine from the gas stream and permanently storing the lead-exchanged zeolite loaded with radioactive iodine.

### SUMMARY OF INVENTION

### TECHNICAL PROBLEM

In both of the adsorbents described in Patent Documents 1 and 2, the crystal structure of zeolite, which has such a pore size as to provide a molecular sieve effect, is utilized to selectively adsorb radioactive iodine. The adsorbents described in both of the documents are considered to have a measure of success in adsorbing radioactive iodine. However, there is still a demand for higher-performance radioactive iodine adsorbents for reliably preventing leakage of radioactive iodine into the outside.

If an extraordinary situation such as a nuclear reactor accident or the like occurs in a nuclear power facility, a large amount of radioactive materials including radioactive iodine is released into a large area. Therefore, nuclear reactor accidents must be prevented. To this end, a plan to provide, to a nuclear reactor building, a filter vent for reducing pressure in a nuclear reactor when an extraordinary situation occurs in the nuclear reactor is under way. However, the radioactive iodine adsorbents described in Patent Documents 1 and 2 are not intended for addressing extraordinary situations where filter venting or the like is required. Therefore, further research and development efforts are required to provide a radioactive iodine adsorbent that can be used even when an extraordinary situation occurs, or a process of using such a radioactive iodine adsorbent. Hydrogen generated in a nuclear reactor is considered to be a factor in nuclear reactor accidents. The reduction of such hydrogen is not at all described in Patent Document 1 or 2.

With the above problems in mind, the present invention has been made. It is an object of the present invention to remove via a radioactive iodine adsorbent that can adsorb radioactive iodine effectively hydrogen that is a factor in nuclear reactor accidents, thus providing a method for treating radioactive iodine, which can be used to address extraordinary situations where filter venting or the like is required.

### SOLUTION TO PROBLEM

The invention is defined in the claims. A radioactive iodine is a granulated radioactive iodine adsorbent of zeolite X. There are a variety of zeolites, which have different crystal structures. Zeolites have a characteristic feature that each crystal structure has considerably uniform pore diameters. Such a characteristic pore diameter allows zeolite to be used for molecular sieve, selective adsorption of molecules, and the like.

In the granulated radioactive iodine adsorbent, zeolite X, which is a zeolite that has a relatively large pore diameter, is used, specifically zeolite 13X. Sodium at ion exchange sites of zeolite X is substituted with silver. As a result, radioactive iodine can be adsorbed in the form of silver iodide. Therefore, even if an extraordinary situation such as a nuclear reactor accident occurs, radioactive iodine can be prevented from being released into the outside of a nuclear reactor.

When sodium of zeolite X is substituted with silver so that a size of minute pores of zeolite X is suited to a size of a hydrogen molecule, and the silver content when dried is 36 wt% or more, the particle size is 10 × 20 mesh, the hardness is 94% or more as measured in accordance with JIS K 1474-4-7, and the water content when dried at 150°C for 3 h and thereby reduced in weight is 12 wt% or less, and therefore, the zeolite X after the substitution can efficiently collect hydrogen molecules, even in a situation where hydrogen is generated due to a nuclear reactor accident or the like, the radioactive iodine adsorbent used in the present invention can be used to remove hydrogen so that a nuclear reactor accident can be avoided.

In the present invention, 97% or more of the ion exchange sites of the zeolite X are substituted with silver.

In the radioactive iodine adsorbent having this feature, 97% or more of the ion exchange sites, i.e., sodium of the zeolite X are substituted with silver, and therefore, the zeolite X can effectively adsorb radioactive iodine with high efficiency. In addition, the efficiency of removal of hydrogen is improved. Therefore, an extraordinary situation in a nuclear reactor can be avoided.

In the present invention, the ion exchange sites of the zeolite X are not substituted with any material other than silver.

In the radioactive iodine adsorbent having this feature, the ion exchange sites, i.e., sodium of the zeolite X are not substituted with any material other than silver. Therefore, the radioactive iodine adsorptivity is sustained over a long period of time.

The present invention defined in the claims includes: a filling step of filling an air-permeable container with the above granulated radioactive iodine adsorbent, following a flow passing step of passing a flow of the steam discharged from the nuclear power facility, through the container filled with the granulated radioactive iodine adsorbent, so that effective radioactive iodine adsorption and hydrogen removal with high efficiency can be achieved by performing the above two steps.

The method for treating radioactive iodine may be performed, for example, after a treatment by filter venting. Filter venting refers to an operation of discharging high-pressure steam in a nuclear reactor from a nuclear reactor building in order to control or prevent nuclear reactor accidents or leakage and release of radioactive iodine accompanying such accidents when an extraordinary situation occurs in the nuclear reactor. By performing the method for treating radioactive iodine according to the present invention after filter venting, radioactive iodine and hydrogen contained in high-pressure steam discharged by filter venting can be adsorbed and thereby reliably removed. As a result, the risk of release of radioactive iodine or a nuclear reactor accident can be avoided or controlled.

In the method for treating radioactive iodine according to the present invention, the steam discharged from the nuclear power facility is preferably superheated steam having a temperature of 100°C or more.

With this feature, even if the steam is at considerably high temperature as described above, then when the radioactive iodine adsorbent is used in the flow passing step, hydrogen contained in the steam can be efficiently adsorbed.

In the method for treating radioactive iodine according to the present invention, in the filling step, the filling density of the radioactive iodine adsorbent is preferably adjusted to 1.0 g/ml or more.

With this feature, the filling density of the radioactive iodine adsorbent is adjusted to 1.0 g/ml or more, which allows for effective adsorption and removal of radioactive iodine and hydrogen with high efficiency.

In the method for treating radioactive iodine according to the present invention, in the flow passing step, a period of time for which the steam is retained in the container filled with the radioactive iodine adsorbent is preferably set to 0.06 sec or more.

With this feature, even when the retaining time is as short as 0.06 sec or more, the radioactive iodine adsorbent can effectively collect and remove radioactive iodine and hydrogen with high efficiency.

In the method for treating radioactive iodine according to the present invention, in the flow passing step, the steam preferably has a pressure of 399 kPa or more.

With this feature, even when the pressure of the steam is as high as 399 kPa or more, the radioactive iodine adsorbent can effectively adsorb and remove radioactive iodine and hydrogen with high efficiency in the flow passing step.

In the flow passing step, the container filled with the radioactive iodine adsorbent preferably has a humidity of 95% or more.

### BRIEF DESCRIPTION OF DRAWINGS

[FIG. 1] FIG. 1 is a diagram for describing zeolite X used as a radioactive iodine adsorbent.
[FIG. 2] FIG. 2 is a schematic diagram of a configuration of nuclear reactor equipment.
[FIG. 3] FIG. 3 is a schematic diagram of a configuration where a radioactive iodine adsorbent according to a first embodiment is provided in a boiling water reactor.
[FIG. 4] FIG. 4 is a schematic diagram of a configuration where a radioactive iodine adsorbent according to a second embodiment is provided in a boiling water reactor.
[FIG. 5] FIG. 5 is a schematic diagram of a configuration where a radioactive iodine adsorbent according to a third embodiment is provided in a boiling water reactor.
[FIG. 6] FIG. 6 is a schematic diagram of a configuration where a radioactive iodine adsorbent according to a fourth embodiment is provided in a pressurized water reactor.
[FIG. 7] FIG. 7 is a graph showing increases or changes in the temperature of a radioactive iodine adsorbent.

### DESCRIPTION OF EMBODIMENTS

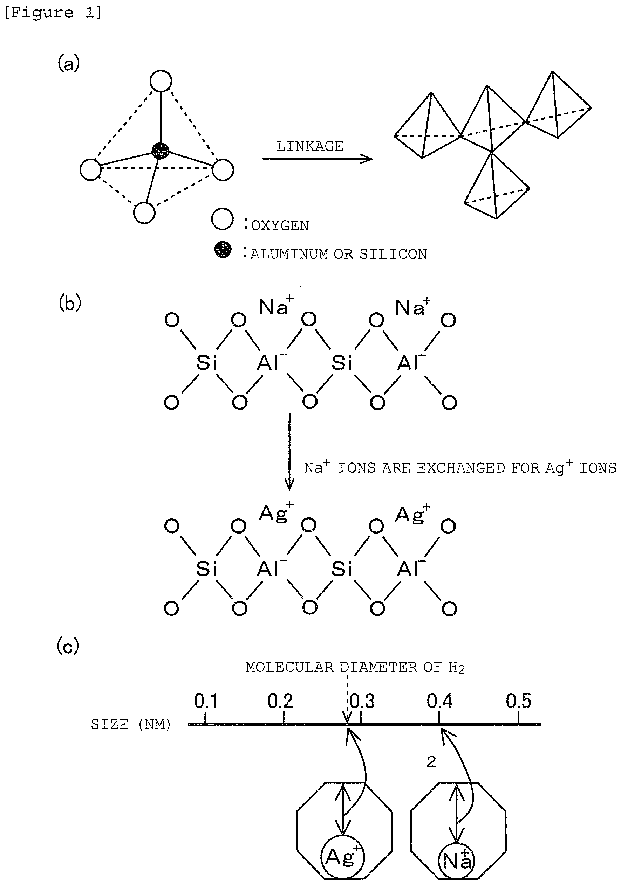

Embodiments of a radioactive iodine adsorbent not according to the present invention and embodiments of a method for treating radioactive iodine according to the present invention will now be described with reference to FIGS. 1-7. Note that the present invention is defined in the claims.

### <Radioactive Iodine Adsorbent>

Firstly, zeolite X that is used in a radioactive iodine adsorbent will be described. FIG. 1 is a diagram for describing a zeolite included in the radioactive iodine adsorbent. FIG. 1(a) is a schematic diagram of the crystal structure of zeolites. FIG. 1(b) is a diagram for describing a reaction in which sodium sites of zeolite 13X are substituted with silver. FIG. 1(c) is a diagram for describing the reduction of a pore diameter size as a result of substitution of sodium sites of zeolite 13X with silver.

As shown in FIG. 1(a), zeolites, which are a type of silicate, have (SiO₄)⁴⁻ and (AlO₄)⁵⁻ having a tetrahedron structure as repeating units, which are three-dimensionally linked together to form a crystal structure. The repeating units are linked in different ways to form different crystal structures. Each crystal structure formed has a specific uniform pore diameter. This uniform pore diameter allows zeolites to have properties such as molecular sieve, adsorption, and ion exchange capability.

The radioactive iodine adsorbent used in the present invention includes zeolite 13X, which is a type of zeolite X. Zeolite 13X is widely industrially used. The composition of zeolite 13X is Na₈₆[(AlO₂)₈₆(SiO₂)₁₀₆]·276H₂O. As shown in FIG. 1(b), the radioactive iodine adsorbent is formulated by ion-exchanging sodium sites of zeolite 13X with silver (the sodium sites are ion exchange sites). The silver ion exchange ratio in the radioactive iodine adsorbent is 97% or more, preferably 98% or more. Moreover, the ion exchange sites in zeolite X being not ion-exchanged with any material other than silver, in the radioactive iodine adsorbent, substantially all sodium sites in zeolite 13X are ion-exchanged with silver. Such a high ion exchange ratio allows the radioactive iodine adsorbent to have considerably higher adsorptivity than that of conventional radioactive iodine adsorbents.

Incidentally, when sodium sites in zeolite 13X are ion-exchanged with silver, the resultant zeolite 13X has a smaller pore diameter size than that of the original zeolite 13X. Zeolite 13X that is adapted to have a smaller pore diameter size is effective in adsorbing hydrogen, and as a radioactive iodine adsorbent. Specifically, as shown in FIG. 1(c), the pore diameter (about 0.4 nm) of zeolite 13X that has sodium sites before being ion-exchanged with silver is too great to hold a hydrogen molecule (molecule diameter: about 0.29 nm). Meanwhile, the present inventors found that zeolite 13X, sodium sites of which have been ion-exchanged with silver, has an optimum pore diameter (about 0.29 nm) so that a hydrogen molecule fits into the pore, and as a result, zeolite 13X having silver obtained by ion exchange can effectively adsorb, with high efficiency, not only radioactive iodine but also hydrogen molecules.

The radioactive iodine adsorbent is preferably formulated so that, in addition to the feature that the above ion exchange ratio is achieved, the proportion of the silver component (silver content) in the adsorbent when dried is 36 wt% or more, the particle size is 10 × 20 mesh (JIS K 1474-4-6), the hardness is 94% or more (JIS K 1474-4-7), and the water content of the adsorbent when dried at 150°C for 3 h and thereby reduced in weight is 12 wt% or less. As used herein, the term "10 × 20 mesh" with respect to the size of a particle means that the particle can pass through a 10-mesh sieve, but not through a 20-mesh sieve, i.e., that the particle size is 10-20 mesh. If a radioactive iodine adsorbent is formulated to have such properties, the radioactive iodine adsorbent can more effectively exhibit the above high hydrogen molecule adsorptivity. Radioactive iodine adsorbents are exposed to a severe environment (high temperature, high pressure, high humidity), and therefore, are required to have a certain high particle strength. With this in mind, the radioactive iodine adsorbent used in the present invention is adapted to have a loss on attrition of 3% or less (ASTM D-4058). As a result, even if the radioactive iodine adsorbent is placed under severe conditions such as filter venting or the like, the radioactive iodine adsorbent can maintain its particle shape, and therefore, continue to exhibit high hydrogen molecule adsorptivity.

### <Method for Treating Radioactive Iodine>

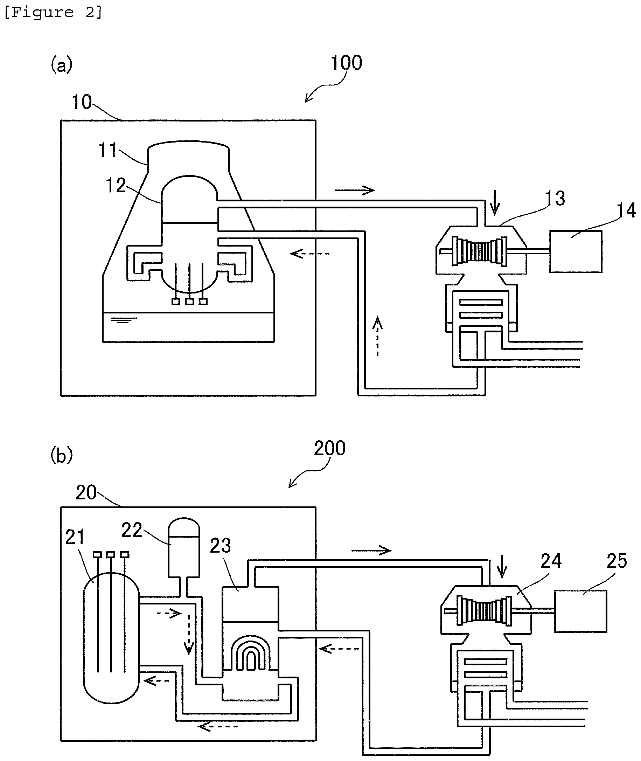

Before describing a method for treating radioactive iodine using the radioactive iodine adsorbent formulated as described above, the structure of a typical nuclear power plant will be described with reference to FIG. 2. FIG. 2 is a schematic diagram of the configuration of nuclear reactor equipment. FIG. 2(a) is a schematic diagram of the configuration of a boiling water reactor (BWR) 100. FIG. 2(b) is a schematic diagram of the configuration of a pressurized water reactor (PWR) 200. In Japan, two types of nuclear reactors, i.e., boiling water reactors (BWR) and pressurized water reactors (PWR), are used as nuclear reactor facilities. Nuclear reactor equipment mainly includes a nuclear reactor building, a nuclear reactor containment building, a nuclear reactor pressure vessel, a turbine, and a generator. As shown in FIG. 2(a), the boiling water reactor 100 includes a nuclear reactor building 10, a nuclear reactor containment building 11, a nuclear reactor pressure vessel 12, a turbine 13, and a generator 14. In the boiling water reactor 100, water is boiled in the nuclear reactor pressure vessel 12, steam thus produced is sent to the turbine 13 as indicated by a solid line arrow shown in FIG. 2, and the nuclear reactor water is recirculated as indicated by a dashed line arrow. The steam directly drives the turbine 13 to rotate, which causes the generator 14 to produce electricity. Meanwhile, as shown in FIG. 2(b), in the pressurized water reactor 200, a nuclear reactor containment building 20 includes a nuclear reactor pressure vessel 21, a pressurizer 22, and a steam generator 23. The pressurizer 22 is used to control water in the nuclear reactor containment building 20 so that the water is always maintained at high pressure and thereby prevented from boiling even at high temperature. The steam generator 23 is used to generate steam (indicated by a solid line arrow in FIG. 2(b)) from water separated from water flowing inside the nuclear reactor (indicated by a dashed line arrow in FIG. 2(b)). This steam drives a turbine 24 to rotate, which causes a generator 25 to produce electricity. In a first embodiment below, a method for treating radioactive iodine using a radioactive iodine adsorbent will be described in relation to the boiling water reactor of FIG. 2(a).

### [First Embodiment]

### (Filling Step)

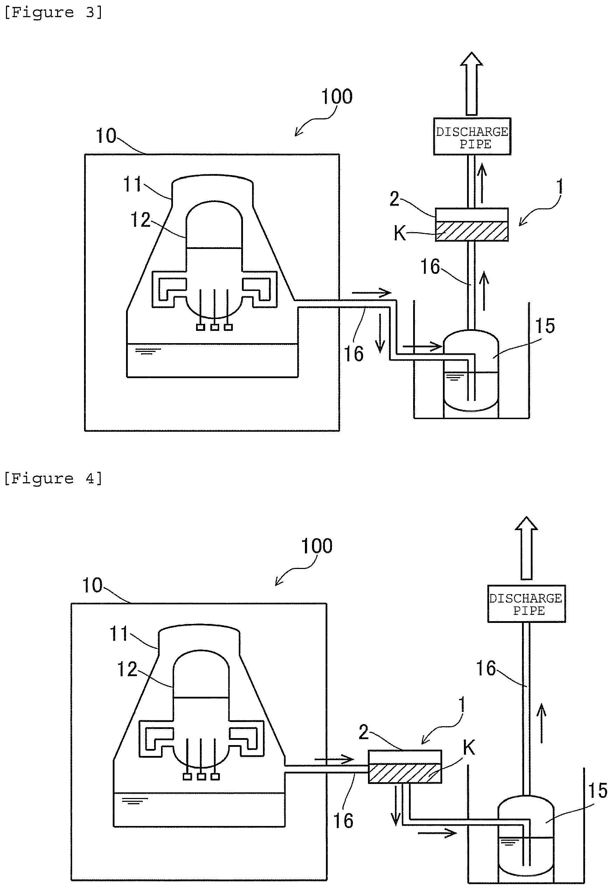

FIG. 3 is a schematic diagram of a configuration where a radioactive iodine treatment unit 1 that contains a radioactive iodine adsorbent K according to a first embodiment is provided in the boiling water reactor 100. In the first embodiment, a method for treating radioactive iodine that is provided, assuming that an extraordinary situation occurs due to an accident or the like in a nuclear reactor, will be described. A filter vent 15 is provided outside the nuclear reactor building 10 in case the nuclear reactor containment building 11 is damaged due to an accident occurring in the nuclear reactor. The filter vent 15 is a piece of equipment which is provided so that when, for example, the nuclear reactor containment building 11 is damaged due to an accident, steam is sent from the nuclear reactor containment building 11 to the filter vent 15 through a pipe 16 as indicated by a solid line arrow in FIG. 3 in order to reduce the internal pressure, and the filter vent 15 collects radioactive iodine in the steam to reduce the amount of radioactive iodine before discharging the steam into the outside of the nuclear reactor building 10. As shown in FIG. 3, the radioactive iodine treatment unit 1, which includes a container 2 for containing the radioactive iodine adsorbent K, is disposed and coupled to the filter vent 15. As described below, the container 2 is preferably formed of a heat-resistant and corrosion-resistant material because steam or gas that has passed through the nuclear reactor containment building 11 or the filter vent 15 flows therethrough. Such a material for the container 2 is, for example, stainless steel, and may be an aluminum alloy or the like. The container 2 needs to have air permeability so that steam or gas is allowed to flow through the radioactive iodine adsorbent K. To this end, the container 2 is provided with a plurality of minute pores. The container 2 is filled with the radioactive iodine adsorbent K, where the filling density is adjusted to 1.0 g/ml or more, preferably 1.2 g/ml or more (filling step). Such a filling density allows the radioactive iodine adsorbent K to exhibit an optimum adsorption effect. It is desirable for workers to work as easily and quickly as possible in a nuclear reactor facility in order to pay a maximum level of attention to the safety. In this regard, the radioactive iodine treatment unit 1 has a simple configuration as described above, and therefore, when the adsorption effect of the radioactive iodine adsorbent K has become weak, the radioactive iodine adsorbent K is only removed from the container 2 and replaced with a new radioactive iodine adsorbent K, i.e., only a simple work is required. Therefore, a load on workers can be reduced, so that the safety of workers can be ensured.

### (Flow Passing Step)

While, as described above, the filter vent 15 can be used to reduce the amount of radioactive iodine, it is necessary to substantially completely remove radioactive iodine before discharging the steam or gas from the nuclear reactor building 10 because radioactive iodine has serious deleterious effects on human bodies and environments. Therefore, the radioactive iodine adsorbent K of the present disclosure is used to substantially completely remove radioactive iodine. As shown in FIG. 3, the steam treated by the filter vent 15 is sent to the radioactive iodine treatment unit 1 through the pipe 16 as indicated by the solid line arrow of FIG. 3. Thereafter, a flow of the steam passes through the radioactive iodine adsorbent K with which the container 2 of the radioactive iodine treatment unit 1 is filled (flow passing step). As described above, the radioactive iodine adsorbent K has a pore diameter suited to a hydrogen molecule, and is contained in the container 2 having air permeability, and therefore, effectively removes hydrogen contained in the steam passing through the radioactive iodine treatment unit 1. Thereafter, the steam after the adsorption of radioactive iodine and the removal of hydrogen is discharged from the nuclear reactor facility through a discharge pipe. Here, the steam flowing in the radioactive iodine treatment unit 1 is superheated steam having a temperature of 100°C or more and a pressure of 399 kPa or more. In addition, the humidity in the container 2 is 95% or more. Under such a severe condition, the radioactive iodine adsorbent K can remove radioactive iodine and hydrogen. Moreover, in the method for treating radioactive iodine according to the present invention, a retaining time for which the steam flowing in the radioactive iodine treatment unit 1 is retained in the container 2 is set to 0.06 sec or more. If the nuclear reactor containment building 11 is damaged, it is necessary to take measures against this as quickly as possible in order to avoid or control leakage or release of radioactive iodine or nuclear reactor accidents. To this end, the treatment by the filter vent 15 and the treatment of radioactive iodine need to be completed as quickly as possible. Here, in the present invention, as described above, the steam retaining time in the container 2 is considerably short, and therefore, in emergency situations, the adsorption of radioactive iodine and the removal of hydrogen can be completed more quickly than when conventional radioactive iodine treatment methods are used. Thus, the present invention provides a method considerably effective in ensuring the safety.

### [Second Embodiment]

In the first embodiment, the boiling water reactor 100 is provided with the radioactive iodine treatment unit 1 that is not disposed directly adjacent to the nuclear reactor containment building 11. In contrast to this, in the second embodiment, as shown in FIG. 4, the radioactive iodine treatment unit 1 is disposed between the filter vent 15 and the nuclear reactor containment building 11. In this case, as indicated by a solid line arrow in FIG. 4, steam discharged from the nuclear reactor containment building 11 is sent to the radioactive iodine treatment unit 1 through the pipe 16. In other words, radioactive iodine and hydrogen are adsorbed by the radioactive iodine treatment unit 1 before being treated by the filter vent 15. The radioactive iodine adsorbent K of the present disclosure can effectively adsorb and remove radioactive iodine and hydrogen even when severe steam flows in the container 2, such as superheated steam having a temperature of 100°C or more, or the like. Therefore, steam discharged from the nuclear reactor containment building 11 can be sent directly to the radioactive iodine treatment unit 1, which can effectively treat the steam. Thus, radioactive iodine is adsorbed and hydrogen is removed by the radioactive iodine treatment unit 1 before the steam is sent to the filter vent 15, and therefore, a load on the following filter vent 15 can be reduced, and the treatment can be smoothly performed by the filter vent 15. The cost of building the filter vent 15 is high, and the heavy use of the filter vent 15 may accelerate deterioration. Therefore, if the method for treating radioactive iodine according to the present invention is performed in advance (upstream) of the filter vent 15, the lifespan of the filter vent 15 can be extended so that the filter vent 15 can continue to work over a long period of time.

### [Third Embodiment]

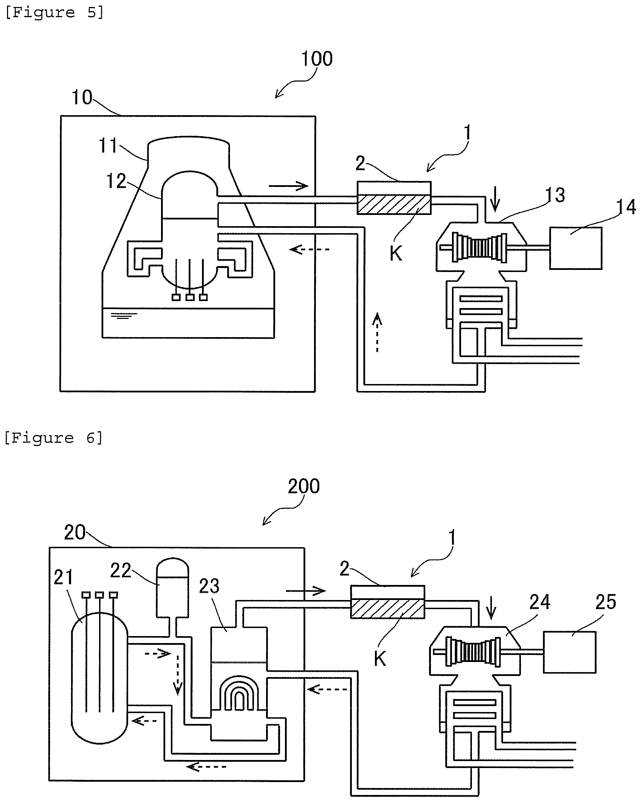

In the first and second embodiments, it is assumed that an emergency situation occurs due to an accident or the like in a nuclear reactor facility (the boiling water reactor 100). The radioactive iodine adsorbent K and the method for treating radioactive iodine according to the present invention can be used in not only emergency situations but also other situations. In particular, in the boiling water reactor 100, steam is sent directly from the nuclear reactor pressure vessel 12 to the turbine 13 as described above, and therefore, it is necessary to strictly manage the amounts of radioactive iodine and hydrogen in order to ensure the safety. To this end, as shown in FIG. 5, the radioactive iodine treatment unit 1 may be provided between the nuclear reactor pressure vessel 12 and the turbine 13 so that radioactive iodine can be adsorbed and hydrogen can be removed by the radioactive iodine adsorbent K before the steam being sent to the turbine 13. By such an arrangement, the turbine 13 can be driven to rotate using safe steam, and therefore, risks that are caused by radioactive iodine and hydrogen can be avoided.

### [Fourth Embodiment]

The first to third embodiments are all directed to boiling water reactors. The radioactive iodine adsorbent K and the method for treating radioactive iodine according to the present invention are also applicable to pressurized water reactors (PWR). As shown in FIG. 2(b), in the pressurized water reactor 200, water that contains radioactive materials is not directly sent to the turbine 24. Thus, pressurized water reactors are safer and easier to maintain than boiling water reactors. However, nuclear reactors are a piece of equipment that handles nuclear fuel, that is a considerably harmful material, and therefore, strict risk management is required. To this end, in pressurized water reactors, the radioactive iodine adsorbent K can be used to address emergency situations. When the radioactive iodine adsorbent K is applied to the pressurized water reactor 200, the radioactive iodine treatment unit 1 may be provided at some point in the pathway of steam sent from the steam generator 23 to the turbine 24 as shown in FIG. 6, for example. As in boiling water reactors, in order to take measures when a nuclear reactor is damaged due to an accident or the like, the radioactive iodine treatment unit 1 may be provided adjacent only to a filter vent, or between a nuclear reactor containment building and a filter vent (not shown).

### Examples

### [Example 1]

In Example 1, a test for adsorption of radioactive iodine using the method for treating radioactive iodine according to the present invention was conducted.

Initially, 97% of the sodium sites of zeolite 13X were ion-exchanged with silver, followed by granulation, so that the silver component was 36 wt%, the particle size was 10 × 20 mesh (JIS K 1474-4-6), and the water content when dried at 150°C for 3 h was 12 wt%. An air-permeable container was filled with the resultant zeolite 13X, where the filling density was 1.0 g/ml. Thus, a radioactive iodine adsorbent was formulated. The radioactive iodine adsorbent thus formulated had a hardness of 94% (JIS K 1474-4-7). Next, various radioactive iodine adsorbents having different thicknesses were measured in terms of the steam retaining time in the container and the methyl iodide adsorption effect, with respect to steam, where the steam had a humidity of 95%, a temperature of 130°C, and a pressure of 399 kPa, and contained 1.75 mg/m³ of methyl iodide (CH₃¹³¹I), and had a linear speed of 20 cm/sec and 41 cm/sec. The result of the measurement is shown in Table 1.

**[Table 1]**

| 20 cm/sec | | | 41 cm/sec | | |
|---|---|---|---|---|---|
| Thickness (cm) | Retaining time (sec) | Adsorption rate (%) | Thickness (cm) | Retaining time (sec) | Adsorption rate (%) |
| 2.5 | 0.123 | 99.032 | 2.5 | 0.061 | 97.989 |
| 5.0 | 0.246 | 99.967 | 5.0 | 0.123 | 99.673 |
| 7.5 | 0.369 | > 99.999 | 7.5 | 0.184 | 99.843 |
| 10.0 | 0.492 | > 99.999 | 10.0 | 0.246 | 99.974 |

As can be seen from the result of Table 1, even when the linear speed was set to 41 cm/sec, the methyl iodide adsorption rate was high. In particular, even when the retaining time was as short as 0.061 sec, the methyl iodide adsorption rate was 97.989%, which is a good result.

### [Example 2]

In Example 2, the radioactive iodine adsorbent formulated in Example 1, that had a thickness of 5.0 cm, was measured in terms of the methyl iodide adsorption effect at various temperatures, with respect to steam, where the steam had a pressure of 101 kPa and contained 17 mg/m³ of methyl iodide (CH₃I), and had a linear speed of 46 cm/sec. The result of the measurement is shown in Table 2.

**[Table 2]**

| | | | |
|---|---|---|---|
| Temperature (°C) | 110 | 125 | 150 |
| Adsorption rate (%) | 99.90 | 99.95 | 99.95 |

As can be seen from the result of Table 2, even when the steam had a temperature of as high as 100°C or more, the methyl iodide adsorption rate was as high as 99% or more.

### [Example 3]

In Example 3, a filter (100 cm × 83 cm) formed of the radioactive iodine adsorbent formulated in Example 1, that had a radioactive iodine adsorbent thickness of 26 mm and a mass of 26 kg, was measured in terms of the methyl iodide adsorption effect at various temperatures, with respect to steam, where the steam had a pressure of 101 kPa and contained 0.608 mg/m³ of methyl iodide (CH₃I), and had a linear speed of 20 cm/sec. The result of the measurement is shown in Table 3.

**[Table 3]**

| | | | | |
|---|---|---|---|---|
| Temperature (°C) | 30 | 40 | 70 | 150 |
| Adsorption rate (%) | 99.77 | 99.85 | 99.91 | 99.98 |

In Example 3, unlike Examples 1 and 2, the radioactive iodine adsorbent was measured in terms of the adsorption rate, where the radioactive iodine adsorbent had a size and a mass similar to those in actual use. As can be seen from the result of Table 3, in such a case, even when the temperature of the steam increased to as high as 150°C, the methyl iodide adsorption rate was still high. Therefore, it was demonstrated that the radioactive iodine adsorbent of the present disclosure has practical utility.

### [Example 4]

In Example 4, the radioactive iodine adsorbent formulated in Example 1 was measured in terms of the methyl iodide adsorption effect for various radioactive iodine adsorbent thicknesses, with respect to steam, where the steam had a pressure of 103 kPa, a temperature of 66°C, and a linear speed of 20.3 cm/sec, and contained 1.75 mg/m³ of methyl iodide (CH₃¹³¹I), and the humidity was 70%. The result of the measurement is shown in Table 4.

**[Table 4]**

| Thickness (mm) | Retaining time (sec) | Adsorption rate (%) |
|---|---|---|
| 50.8 | 0.250 | > 99.999 |
| 76.2 | 0.375 | > 99.999 |
| 101.6 | 0.500 | > 99.999 |

### [Example 5]

In Example 5, the radioactive iodine adsorbent formulated in Example 1 was measured in terms of the methyl iodide adsorption effect related to the thickness and temperature of the radioactive iodine adsorbent, with respect to steam, where the steam had a pressure of 103 kPa and a linear speed of 20.3 cm/sec, and contained 1.75 mg/m³ of methyl iodide (CH₃¹³¹I), and the humidity was 95%. The result of the measurement is shown in Table 5.

**[Table 5]**

| Thickness (mm) | Retaining time (sec) | Adsorption rate (%) | | |
|---|---|---|---|---|
| | | 30°C | 60°C | 90°C |
| 50.8 | 0.250 | 98.738 | 99.685 | 99.970 |
| 76.2 | 0.375 | 99.850 | 99.950 | 99.983 |
| 101.6 | 0.500 | 99.960 | 99.987 | 99.995 |

As can be seen from the result of Table 4, when the humidity was 70%, the methyl iodide adsorption rate was as high as 99.999% or more in all the cases. Meanwhile, the result of Table 5 shows that even when the humidity was as high as 95%, the methyl iodide adsorption rate was still high. Therefore, it is demonstrated that the radioactive iodine adsorbent of the present disclosure has a high adsorption effect even at high humidity.

### [Example 6]

In Example 6, the radioactive iodine adsorbent formulated in Example 1 was measured in terms of the methyl iodide adsorption effect at various temperatures in a dried state, with respect to steam, where the steam had a pressure of 101 kPa and a linear speed of 20 cm/sec, the radioactive iodine adsorbent had a thickness of 5.0 cm, the retaining time was 0.25 sec, and the steam contained 1.75 mg/m³ of methyl iodide (CH₃¹³¹I) . The result of the measurement is shown in Table 6.

**[Table 6]**

| | | | |
|---|---|---|---|
| Temperature (°C) | 30 | 80 | 150 |
| Adsorption rate (%) | 99.9 | 99.9 | 99.9 |

As can be seen from the result of Table 6, even when the temperature was as high as 150°C, the methyl iodide adsorption rate was high.

### [Example 7]

In Example 7, the radioactive iodine adsorbent formulated in Example 1 was measured in terms of the methyl iodide adsorption effect at various humidity at a temperature of 80°C, with respect to steam, where the steam had a pressure of 101 kPa and a linear speed of 20 cm/sec, the radioactive iodine adsorbent had a thickness of 5.0 cm, the retaining time was 0.25 sec, and the steam contained 1.75 mg/m³ of methyl iodide (CH₃¹³¹I) . The result of the measurement is shown in Table 7.

**[Table 7]**

| | | | |
|---|---|---|---|
| Humidity (%) | 0 | 70 | 90 |
| Adsorption rate (%) | 99.9 | 99.9 | 99.9 |

As can be seen from the result of Table 7, even when the humidity was as high as 90% at a temperature of 80°C, the methyl iodide adsorption rate was high.

### [Example 8]

In Example 8, the radioactive iodine adsorbent formulated in Example 1 was measured in terms of the methyl iodide adsorption effect related to the thickness and temperature of the radioactive iodine adsorbent in a dried state under atmospheric pressure, with respect to steam, where the steam had a pressure of 104 kPa and a linear speed of 20 cm/sec, and contained 75 mg/m³ of iodine (¹³¹I). The result of the measurement is shown in Table 8.

**[Table 8]**

| Thickness (cm) | Retaining time (sec) | Adsorption rate (%) |
|---|---|---|
| 2.5 | 0.123 | 100 |
| 5.0 | 0.246 | 100 |
| 10.0 | 0.492 | 100 |

As can be seen from the result of Table 8, the iodine adsorption rate was 100% in a dried state under atmospheric pressure in all the cases. It was demonstrated that the radioactive iodine adsorbent has considerably high performance.

### [Example 9]

In Example 9, the radioactive iodine adsorbent formulated in Example 1 was measured in terms of the hydrogen adsorption effect, where the radioactive iodine adsorbent had a thickness of 5 cm. The result of the measurement is shown in Table 9.

**[Table 9]**

| Flow rate of humidified air (ml/min) | Flow rate of hydrogen (ml/min) | Retaining time (sec) | Hydrogen content before passage of flow (%) | Temperature (°C) | Increase in temperature (°C) | Hydrogen content after passage of flow (%) |
|---|---|---|---|---|---|---|
| 2200 | 45 | 2.62 | 2.0 | 54 | - | 1.2 |
| | | | | 62 | - | 0.8 |
| | | | | 79 | - | 0.5 |
| 2200 | 68 | 2.60 | 3.0 | 77 | - | 1.0 |
| | | | | 117 | 2 | < 0.5 |
| | | | | 137 | 15 | < 0.5 |
| 6600 | 205 | 0.87 | 3.0 | 75 | 1 | > 1.5 |
| | | | | 120 | 15 | < 0.5 |
| | | | | 136 | 17 | < 0.5 |

As can be seen from the result of Table 9, when the temperature is as high as 100°C or more, the hydrogen content after a flow of the steam was passed through the radioactive iodine adsorbent was 0.5% or less, i.e., about 83% or more of hydrogen were adsorbed. It was also observed that when the temperature was 137°C or 136°C, the temperature increased by 15°C and 17°C, respectively. Even in this case, the hydrogen content after a flow of the steam was passed through the radioactive iodine adsorbent was 0.5% or less. This demonstrates that the radioactive iodine adsorbent of the present invention is a high-performance adsorbent that can adsorb hydrogen in a stable manner even at high temperature.

### [Example 10]

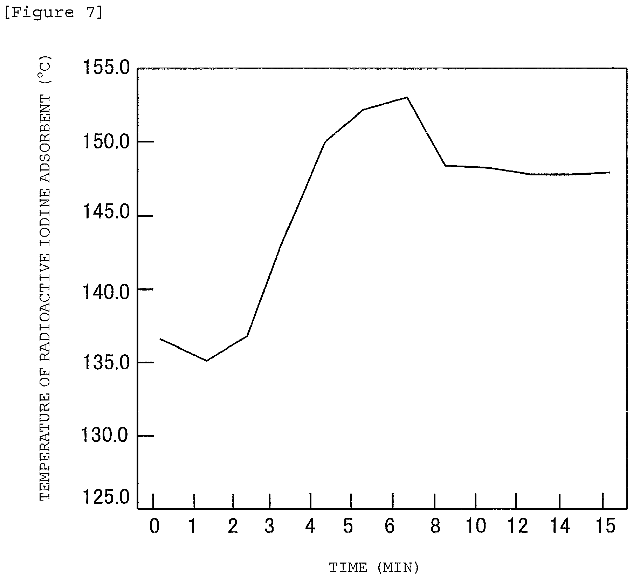

In Example 10, the radioactive iodine adsorbent formulated in Example 1 was measured in terms of an increase in temperature, with respect to steam having a hydrogen content of 3%, where a flow of the steam was passed through the radioactive iodine adsorbent having a temperature of 136°C, and the hydrogen content after a flow of the steam was passed through the radioactive iodine adsorbent was 0.5% or less. The result of the measurement is indicated by a graph shown in FIG. 7.

As can be seen from the graph of FIG. 7, the temperature of the radioactive iodine adsorbent did not significantly increase, and the radioactive iodine adsorbent adsorbed hydrogen in a stable manner.

The results of Examples 1-8 demonstrate that the radioactive iodine adsorbent used in the present invention and the method for treating radioactive iodine using the same have a considerably excellent adsorption effect on steam having high temperature, high pressure and high humidity, and in addition, a quick and efficient adsorption effect. Moreover, the results of Examples 9 and 10 demonstrate that the radioactive iodine adsorbent used in the present invention effectively adsorbs hydrogen as well as radioactive iodine with high efficiency.

### INDUSTRIAL APPLICABILITY

The method for treating radioactive iodine according to the present invention is effective in avoiding or controlling the risks of leakage and release of radioactive iodine, nuclear reactor accidents, and the like in a nuclear reactor facility.

### REFERENCE SIGNS LIST

- 1: RADIOACTIVE IODINE TREATMENT UNIT
- 2: CONTAINER
- 10: NUCLEAR REACTOR BUILDING
- 11, 20: NUCLEAR REACTOR CONTAINMENT BUILDING
- 12, 21: NUCLEAR REACTOR PRESSURE VESSEL
- 100: BOILING WATER REACTOR
- 200: PRESSURIZED WATER REACTOR
- K: RADIOACTIVE IODINE ADSORBENT

## Claims

1. A method for treating radioactive iodine contained in steam discharged from a nuclear power facility (100, 200), which method comprises:
a filling step of filling an air-permeable container (2) with a granulated radioactive iodine adsorbent (K);
a flow passing step of passing a flow of the steam discharged from the nuclear power facility (100, 200), through the container (2) filled with the granulated radioactive iodine adsorbent (K);
a step of removing hydrogen and the iodine from the steam discharged from the nuclear power facility (100, 200) when it generates hydrogen molecules,
wherein the granulated radioactive iodine adsorbent (K) is of zeolite 13X, having 97% or more of the ion exchange sites substituted with silver and not substituted with any material other than silver and having a silver content of 36 wt% or more when dried, a particle size of 10 × 20 mesh, a hardness of 94% or more as measured in accordance with JIS K 1474-4-7, and a water content of 12 wt% or less when dried at 150°C for 3 h and thereby reduced in weight.

2. The method of claim 1, **characterized in that** the steam discharged from the nuclear power facility (100, 200) is superheated steam having a temperature of 100°C or more.

3. The method of claim 1 or 2, **characterized in that**
in the filling step, the filling density of the radioactive iodine adsorbent (K) is adjusted to 1.0 g/ml or more.

4. The method of any one of claims 1-3, **characterized in that**
in the flow passing step, a period of time for which the steam is retained in the container (2) filled with the radioactive iodine adsorbent (K) is set to 0.06 sec or more.

5. The method of any one of claims 1-4, **characterized in that**
in the flow passing step, the steam has a pressure of 399 kPa or more.

6. The method of any one of claims 1-5, **characterized in that**
in the flow passing step, the container (2) filled with the radioactive iodine adsorbent (K) has a humidity of 95% or more.

## Patentansprüche

1. Verfahren zur Behandlung von radioaktivem Jod, das in von einem Kernkraftwerk (100, 200) ausgestoßenem Dampf enthalten ist, umfassend:
einen Befüllschritt des Befüllens eines luftdurchlässigen Behälters (2) mit einem granulierten Adsorptionsmittel (K) für radioaktives Jod,
einen Strömungsdurchleitschritt des Durchleitens einer Strömung des von dem Kernkraftwerk (100, 200) ausgestoßenen Dampfes durch den mit dem granulierten Adsorptionsmittel (K) für radioaktives Jod befüllten Behälter (2),
einen Schritt des Entfernens von Wasserstoff und dem Jod aus dem von dem Kernkraftwerk (100, 200) ausgestoßenen Dampf, wenn es Wasserstoffmoleküle erzeugt,
wobei das granulierte Adsorptionsmittel (K) für radioaktives Jod aus Zeolith 13X besteht, bei dem 97 % oder mehr der lonenaustauschstellen mit Silber substituiert und mit keinem anderen Material als Silber substituiert sind, und der nach dem Trocknen einen Silbergehalt von 36 Gew.-% oder mehr, eine Partikelgroße von 10 x 20 Mesh, eine Härte von 94 % oder mehr gemäß JIS K 1474-4-7 gemessen und, nach dem Trocknen bei 150 °C für 3 Stunden und dadurch gewichtsreduziert, einen Wassergehalt von 12 Gew.-% oder weniger aufweist.

2. Verfahren nach Anspruch 1, **dadurch gekennzeichnet, dass**
der von dem Kernkraftwerk (100, 200) ausgestoßene Dampf Heißdampf mit einer Temperatur von 100 °C oder mehr ist.

3. Verfahren nach Anspruch 1 oder 2, **dadurch gekennzeichnet, dass**
in dem Befüllschritt die Fülldichte des Adsorptionsmittel (K) für radioaktives Jod auf 1,0 g/ml oder mehr angepasst ist.

4. Verfahren nach einem der Ansprüche 1 bis 3, **dadurch gekennzeichnet, dass**
in dem Strömungsdurchleitschritt eine Zeitspanne, in der der Dampf in dem mit dem Adsorptionsmittel (K) für radioaktives Jod befüllten Behälter (2) gehalten wird, auf 0,06 Sek. eingestellt ist.

5. Verfahren nach einem der Ansprüche 1 bis 4, **dadurch gekennzeichnet, dass**
in dem Strömungsdurchleitschritt der Dampf einen Druck von 399 kPa oder mehr aufweist.

6. Verfahren nach einem der Ansprüche 1 bis 5, **dadurch gekennzeichnet, dass**
in dem Strömungsdurchleitschritt der mit dem Adsorptionsmittel (K) für radioaktives Jod befüllte Behälter (2) eine Feuchtigkeit von 95 % oder mehr aufweist.

## Revendications

1. Procédé pour le traitement d'iode radioactif contenu dans un courant déchargé d'une centrale nucléaire (100, 200), lequel procédé comprend :
une étape de charge chargeant un récipient perméable à l'air (2) avec un adsorbant d'iode radioactif granulé (K) ;
une étape de passage d'écoulement faisant passer un écoulement de la vapeur déchargée de la centrale nucléaire (100, 200), à travers le récipient (2) chargé avec l'adsorbant d'iode radioactif granulé (K) ;
une étape d'élimination d'hydrogène et de l'iode du courant déchargé de la centrale nucléaire (100, 200) lorsqu'elle produit des molécules d'hydrogène,
dans lequel l'adsorbant d'iode radioactif granulé (K) est constitué de zéolite 13X, présentant 97 % ou plus des sites d'échange d'ions substitués avec de l'argent et non substitués avec un autre matériau différent de l'argent et présentant une teneur en argent de 36 % en masse ou supérieure lorsqu'il est séché, une taille de particule de 10 x 20 mesh, une dureté de 94 % ou supérieure comme mesurée selon JIS K 1474-4-7, et une teneur en eau de 12 % en masse ou inférieure lorsqu'il est séché à 150°C pendant 3 h et par-là réduit en masse.

2. Procédé selon la revendication 1, **caractérisé en ce que**
la vapeur déchargée de la centrale nucléaire (100, 200) est de la vapeur surchauffée ayant une température de 100°C ou supérieure.

3. Procédé selon la revendication 1 ou 2, **caractérisé en ce que**
dans l'étape de charge, la densité de charge de l'adsorbant d'iode radioactif (K) est ajustée à 1,0 g/ml ou supérieure.

4. Procédé selon l'une quelconque des revendications 1-3, **caractérisé en ce que**
dans l'étape de passage d'écoulement, une durée pendant laquelle la vapeur est retenue dans le récipient (2) chargé avec l'adsorbant d'iode radioactif (K) est ajustée à 0,06 s ou supérieure.

5. Procédé selon l'une quelconque des revendications 1-4, **caractérisé en ce que**
dans l'étape de passage d'écoulement, la vapeur présente une pression de 399 kPa ou supérieure.

6. Procédé selon l'une quelconque des revendications 1-5, **caractérisé en ce que**
dans l'étape de passage d'écoulement, le récipient (2) chargé avec l'adsorbant d'iode radioactif (K) présente une humidité de 95 % ou supérieure.
